# FASCICULE DE BREVET EUROPEEN

(11) **EP 2 905 841 B1**
(45) Date de publication et mention de la délivrance du brevet: **21.12.2016**
(21) Numéro de dépôt: 15150315.8
(22) Date de dépôt: 07.01.2015
(51) Int. Cl.: H01R 4/68, H02G 15/34

(54) **Dispositif de connexion d'un cable supraconducteur principal à une pluralité de câbles supraconducteurs secondaires**
Gerät zum Anschliessen von einem supraleitendem Hauptkabel zu einer Mehrzahl von supraleitenden Kabeln
Device for connecting a main superconducting cable to a plurality of superconducting cables

(30) Priorité: 05.02.2014 FR 1450869
(43) Date de publication de la demande: 12.08.2015
(73) Titulaire: Nexans, 75008 Paris (FR)
(72) Inventeur: Lallouet, Nicolas, 62132 Fiennes (FR)
(74) Mandataire: Gauer, Pierre

(56) Documents cités:
- EP-A1- 1 560 292
- EP-A1- 2 523 290
- EP-A1- 2 830 160
- JP-A- 2011 193 607

## Description

La présente invention a pour objet un dispositif de connexion d'un câble supraconducteur principal à une pluralité de câbles supraconducteurs secondaires. Elle est particulièrement adaptée à la connexion de câbles supraconducteurs à haute température, refroidis notamment à l'azote liquide, monophasés ou triphasés.

La supériorité technique des câbles supraconducteurs est due aux propriétés du matériau constituant le conducteur. A des températures avoisinant -200°C, le matériau se transforme en un conducteur électrique quasi parfait, capable de transporter au moins cent fois plus d'électricité que le cuivre. La compacité du supraconducteur, en dépit de son enveloppe de refroidissement, lui confère une capacité de transport d'électricité cinq fois supérieure à celle d'un câble cuivre de même section, et ce avec des pertes électriques bien moindres.

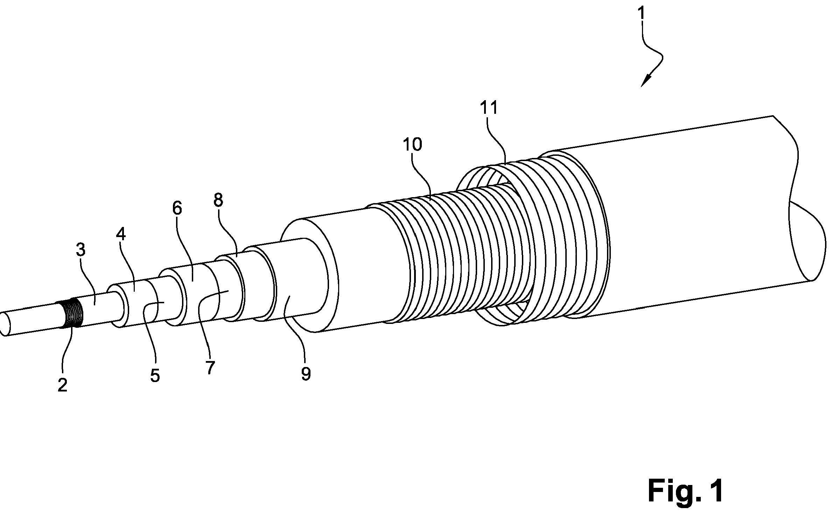

Un câble supraconducteur 1, tel qu'illustré à la figure 1, comprend, de l'intérieur du câble vers l'extérieur du câble, un conduit central 2 aller de liquide cryogénique, un premier conducteur de phase 3, une première couche de matériau diélectrique 4, un deuxième conducteur de phase 5, une deuxième couche de matériau diélectrique 6, un troisième conducteur de phase 7, une troisième couche de matériau diélectrique 8, un écran 9, un conduit 10 retour de liquide cryogénique, et une enveloppe cryogénique 11. Dans le cas d'un câble supraconducteur à haute température, le liquide cryogénique est typiquement de l'azote liquide.

Le document EP1560292 décrit un dispositif de connexion de deux câbles supraconducteurs chacun muni d'un écran.

Le document EP2523290 décrit une unité de terminaison pour câble supraconducteur multiphasé, dans lequel des couches supraconductrices correspondant aux différentes phases sont disposées de façon concentrique, et comprenant une couche d'écran. Le câble supraconducteur 1 peut transporter des courants élevés avec un minimum de pertes et des sections inférieures à celle d'un câble en cuivre de même capacité. Le câble 1 illustré à la figure 1 est un câble supraconducteur concentrique triphasé, mais pourrait également comprendre un nombre différent de phases, comme par exemple dans le cas d'un câble monophasé.

Il apparaît souhaitable de pouvoir connecter un câble supraconducteur principal concentrique à plusieurs câbles supraconducteurs concentriques secondaires, de manière à répartir le courant issu du câble supraconducteur principal dans les différents câbles supraconducteurs secondaires.

La présente invention vise à atteindre cet objectif.

L'invention a ainsi pour objet un dispositif de connexion d'un câble supraconducteur principal à une pluralité de câbles supraconducteurs secondaires.

Le dispositif selon l'invention comprend :
- un câble supraconducteur principal muni d'un écran et de plusieurs conducteurs de phase concentriques,
- plusieurs câbles supraconducteurs secondaires munis chacun d'un écran et de plusieurs conducteurs de phase concentriques,
- l'écran du câble supraconducteur principal étant relié à l'écran de chaque câble supraconducteur secondaire à l'aide d'un élément de connexion d'écran,
   chaque conducteur de phase du câble supraconducteur principal étant relié au conducteur de phase correspondant (c'est-à-dire de même phase) de chaque câble supraconducteur secondaire à l'aide d'un élément de connexion de phase.

L'élément de connexion d'écran et le ou les éléments de connexion de phase sont typiquement disposés à l'intérieur d'un cryostat.

Un fluide cryogénique peut être contenu à l'intérieur du cryostat.

Un matériau de connexion est avantageusement disposé entre l'élément de connexion d'écran et l'écran du câble supraconducteur principal, ainsi qu'entre l'élément de connexion d'écran et chaque écran des câbles supraconducteurs secondaires.

De la même façon, un matériau de connexion est avantageusement disposé entre chaque élément de connexion de phase et le conducteur de phase correspondant du câble supraconducteur principal, ainsi qu'entre chaque élément de connexion de phase et chaque conducteur de phase correspondant des câbles supraconducteurs secondaires.

Le matériau de connexion peut être un matériau de soudure ou de brasure.

Pour le câble supraconducteur principal et pour chaque câble supraconducteur secondaire, les zones situées longitudinalement entre les éléments de connexion adjacents peuvent être recouvertes d'un élément de lissage du champ électrique.

Le câble supraconducteur principal et les câbles supraconducteurs secondaires sont de préférence disposés parallèlement dans le dispositif.

Le dispositif peut par exemple comprendre un câble supraconducteur principal triphasé et des câbles supraconducteurs secondaires triphasés.

D'autres caractéristiques et avantages de la présente invention apparaîtront plus clairement à la lecture de la description suivante donnée à titre d'exemple illustratif et non limitatif et faite en référence aux dessins annexés sur lesquels :
- la figure 1, déjà décrite, est une vue en perspective éclatée d'un câble supraconducteur,
- la figure 2 est une vue en coupe longitudinale d'un dispositif de connexion selon l'invention, conformément à un premier mode de réalisation,
- la figure 3 est une vue en coupe longitudinale d'un dispositif de connexion selon l'invention, conformément à un premier exemple,
- la figure 4 est une vue en coupe transversale d'un dispositif de connexion de selon l'invention, conformément à un deuxième mode de réalisation,
- la figure 5 est une vue en coupe longitudinale d'un dispositif de connexion selon l'invention, conformément à un deuxième exemple.

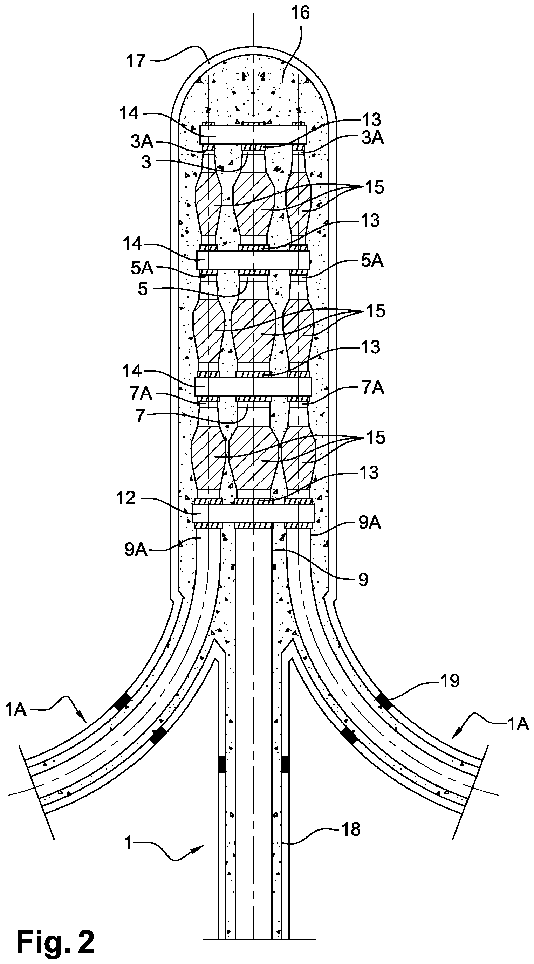

Un dispositif de connexion selon l'invention, tel qu'illustré en coupe longitudinale à la figure 2, est destiné à connecter un câble supraconducteur 1, appelé câble supraconducteur principal, à plusieurs câbles supraconducteurs 1A, appelés câbles supraconducteurs secondaires. Les câbles supraconducteurs principal 1 et secondaires 1A peuvent être similaires au câble supraconducteur illustré à la figure 1, à plusieurs phases concentriques.

Pour assurer la connexion des différents câbles 1,1 A, ceux-ci sont disposés parallèlement les uns aux autres, au niveau de leur extrémité, et sont dénudés progressivement en escalier, de l'extérieur vers l'intérieur du câble. La première connexion qui est réalisée est la connexion de l'écran 9 du câble principal aux écrans 9A des câbles secondaires 1 A.

Dans un câble supraconducteur, l'écran est un élément électriquement conducteur, de préférence métallique. L'écran est électriquement connecté à un potentiel fixe, de préférence au potentiel de la terre. Il a pour fonction de confiner le champ électrique le long du conducteur entre les conducteurs de phase et l'écran.

Les écrans 9,9A sont connectés à l'aide d'un élément de connexion d'écran 12 qui relie entre eux les différents écrans 9,9A. L'élément de connexion d'écran 12 peut se présenter sous la forme d'une barre ou d'un anneau métallique. Pour faciliter la connexion, on dispose avantageusement un matériau de connexion 13, tel qu'un matériau de soudure ou de brasure, entre l'élément de connexion 12 et les écrans 9,9A. Les écrans 9,9A peuvent être en un matériau supraconducteur ou non, par exemple en cuivre ou en aluminium.

De la même façon, le troisième conducteur de phase 7 du câble principal 1 est ensuite connecté aux troisièmes conducteurs de phases 7A des câbles secondaires 1A, à l'aide d'un élément de connexion de phase 14. Comme pour la connexion des écrans 9,9A, on dispose avantageusement un matériau de connexion 13, tel qu'un matériau de soudure ou de brasure, entre l'élément de connexion 12 et les troisièmes conducteurs de phases 7,7A.

Le deuxième conducteur de phase 5 du câble principal 1 est également connecté aux deuxièmes conducteurs de phases 5A des câbles secondaires 1 A, à l'aide d'un élément de connexion de phase 14. De la même façon, on dispose avantageusement un matériau de connexion 13, tel qu'un matériau de soudure ou de brasure, entre l'élément de connexion de phase 14 et les deuxièmes conducteurs de phase 5,5A.

Enfin, le premier conducteur de phase 3 du câble principal 1 est également connecté aux premiers conducteurs de phase 3A des câbles secondaires 1A, à l'aide d'un élément de connexion de phase 14. On dispose avantageusement un matériau de connexion 13, tel qu'un matériau de soudure ou de brasure, entre l'élément de connexion de phase 14 et les premiers conducteurs de phases 3,3A.

Les zones du dispositif situées longitudinalement entre les éléments de connexion 12,14, c'est-à-dire les couches de matériau diélectrique 4,6,8, sont avantageusement recouvertes d'un élément de lissage 15 du champ électrique, par exemple un cône de contrainte qui peut être en papier ou en polypropylène. L'élément de lissage 15 est destiné à éviter les claquages dans le dispositif.

Les éléments décrits ci-dessus sont immergés dans un fluide cryogénique 16, par exemple de l'azote liquide. Le fluide cryogénique 16 est contenu dans un cryostat 17 qui est relié aux cryostats 18 des différents câbles supraconducteurs 1,1A, via par exemple des cryostats de connexion 19.

Tel qu'illustré à la figure 2, le câble supraconducteur principal 1 est connecté à deux câbles supraconducteurs secondaires 1A. On peut toutefois concevoir que le câble principal 1 soit connecté à davantage de câbles secondaires 1 A.

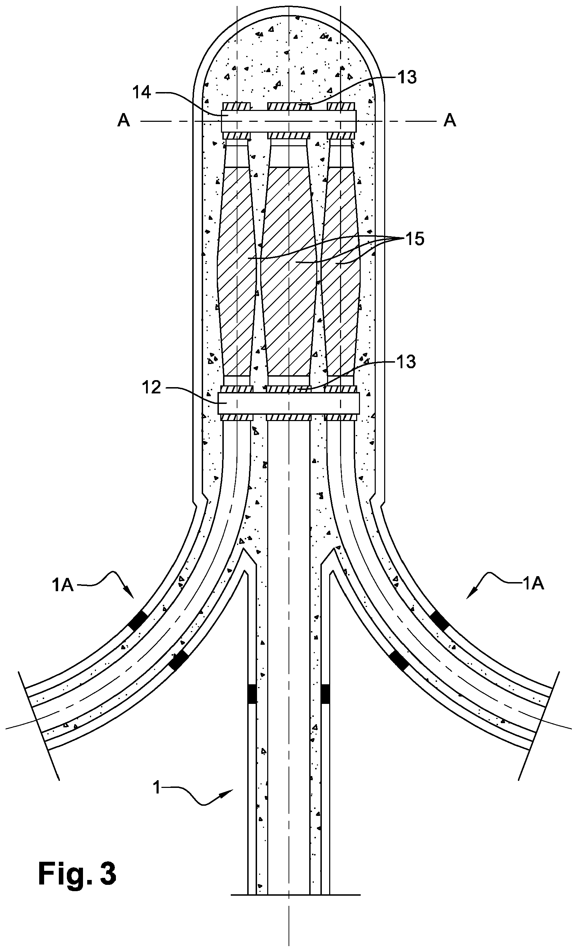

De la même façon, bien que le câble supraconducteur principal 1 et les câbles supraconducteurs secondaires 1A illustrés à la figure 1 soient des câbles triphasés, le dispositif selon l'invention peut également connecter des câbles à une ou plusieurs phases. La figure 3, à titre d'exemple, sur laquelle les éléments identiques à ceux de la figure 2 portent les mêmes références, illustre en coupe longitudinale la connexion d'un câble principal 1 monophasé à deux câbles secondaires 1A monophasés.

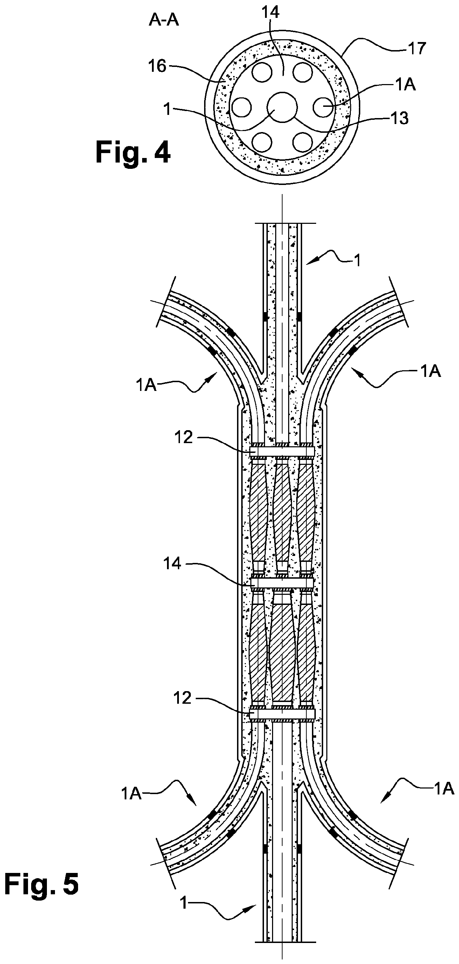

La figure 4 est une vue en coupe A-A de la figure 2, dans le cas où un câble principal 1 est connecté à six câbles secondaires 1 A.

Dans un autre exemple, tel qu'illustré à la figure 5, le câble principal 1 monophasé est connecté à cinq câbles secondaires 1A monophasés. Dans ce mode de réalisation, un unique élément central de connexion de phase 14 permet de relier le conducteur de phase du câble principal aux conducteurs de phase des cinq câbles secondaires 1 A.

Les écrans des deux câbles secondaires 1 A inférieurs sont connectés à l'écran du câble principal à l'aide d'un élément de connexion d'écran 12 inférieur. Les écrans des trois câbles secondaires 1 A supérieurs sont connectés entre eux à l'aide d'un élément de connexion d'écran 12 supérieur qui est relié à la terre.

## Revendications

1. Dispositif de connexion d'un câble supraconducteur principal (1) à une pluralité de câbles supraconducteurs secondaires (1A), ledit dispositif comprenant
un câble supraconducteur principal (1) muni d'un écran (9) et de plusieurs conducteurs de phase (3,5,7) concentriques,
plusieurs câbles supraconducteurs secondaires (1A) munis chacun d'un écran (9A) et de plusieurs conducteurs de phase (3A,5A,7A) concentriques, l'écran (9) du câble supraconducteur principal (1) étant relié à l'écran (9A) de chaque câble supraconducteur secondaire (1A) à l'aide d'un élément de connexion d'écran (12),
chaque conducteur de phase (3,5,7) du câble supraconducteur principal (1) étant relié au conducteur de phase correspondant (3A,5A,7A) de chaque câble supraconducteur secondaire (1A) à l'aide d'un élément de connexion de phase (14).

2. Dispositif selon la revendication 1, **caractérisé en ce que** l'élément de connexion d'écran (12) et le ou les éléments de connexion de phase (14) sont disposés à l'intérieur d'un cryostat (17).

3. Dispositif selon la revendication 2, **caractérisé en ce qu'**un fluide cryogénique (16) est contenu à l'intérieur du cryostat (17).

4. Dispositif selon l'une des revendications 1 à 3, **caractérisé en ce qu'**un matériau de connexion (13) est disposé entre l'élément de connexion d'écran (12) et l'écran (9) du câble supraconducteur principal (1), ainsi qu'entre l'élément de connexion d'écran (12) et chaque écran (9A) des câbles supraconducteurs secondaires (1A).

5. Dispositif selon l'une des revendications 1 à 4, **caractérisé en ce qu'**un matériau de connexion (13) est disposé entre chaque élément de connexion de phase (14) et le conducteur de phase (3,5,7) correspondant du câble supraconducteur principal (1), ainsi qu'entre chaque élément de connexion de phase (14) et chaque conducteur de phase (3A,5A,7A) correspondant des câbles supraconducteurs secondaires (1 A).

6. Dispositif selon la revendication 4 ou 5, **caractérisé en ce que** le matériau de connexion (13) est un matériau de soudure ou de brasure.

7. Dispositif selon l'une des revendications 1 à 6, **caractérisé en ce que** pour le câble supraconducteur principal (1) et pour chaque câble supraconducteur secondaire (1A), les zones situées longitudinalement entre les éléments de connexion adjacents sont recouvertes d'un élément de lissage du champ électrique (15).

8. Dispositif selon l'une des revendications 1 à 7, **caractérisé en ce que** le câble supraconducteur principal (1) et les câbles supraconducteurs secondaires (1 A) sont disposés parallèlem ent dans le dispositif.

9. Dispositif selon l'une des revendications 1 à 8, **caractérisé en ce que** le dispositif comprend un câble supraconducteur principal (1) triphasé et des câbles supraconducteurs secondaires (1A) triphasés.

## Patentansprüche

1. Anschlussvorrichtung eines supraleitenden Hauptkabels (1) an eine Vielzahl supraleitender sekundärer Kabel (1 A), wobei die Vorrichtung umfasst:
ein supraleitendes Hauptkabel (1), ausgestattet mit einer Abschirmung (9) und mehreren konzentrischen Phasenleitern (3, 5, 7),
mehrere supraleitende sekundäre Kabel (1A), wobei jedes mit einer Abschirmung (9A) und mehreren konzentrischen Phasenleitern (3A, 5A, 7A) ausgestattet ist,
wobei die Abschirmung (9) des supraleitenden Hauptkabels (1) mit der Abschirmung (9A) jedes supraleitenden sekundären Kabels (1A) mit Hilfe eines Abschirmungsanschlusselements (12) verbunden ist,
wobei jeder Phasenleiter (3, 5, 7) des supraleitenden Hauptkabels (1) mit dem entsprechenden Phasenleiter (3A, 5A, 7A) jedes supraleitenden sekundären Kabels (1 A) mit Hilfe eines Phasenanschlusselements (14) verbunden ist.

2. Vorrichtung nach Anspruch 1, **dadurch gekennzeichnet, dass** das Abschirmungsanschlusselement (12) und das oder die Phasenanschlusselemente (14) im Innern eines Kryostats (17) angeordnet sind.

3. Vorrichtung nach Anspruch 2, **dadurch gekennzeichnet, dass** ein Kryofluid (16) im Innern des Kryostats (17) enthalten ist.

4. Vorrichtung nach einem der Ansprüche 1 bis 3, **dadurch gekennzeichnet, dass** ein Anschlussmaterial (13) zwischen dem Abschirmungsanschlusselement (12) und der Abschirmung (9) des supraleitenden Hauptkabels (1) sowie zwischen dem Abschirmungsanschlusselement (12) und jeder Abschirmung (9A) der supraleitenden sekundären Kabel (1 A) angeordnet ist.

5. Vorrichtung nach einem der Ansprüche 1 bis 4, **dadurch gekennzeichnet, dass** ein Anschlussmaterial (13) zwischen jedem Phasenanschlusselement (14) und dem entsprechenden Phasenleiter (3, 5, 7) des supraleitenden Hauptkabels (1) sowie zwischen jedem Phasenanschlusselement (14) und jedem entsprechenden Phasenleiter (3A, 5A, 7A) der supraleitenden sekundären Kabel (1A) angeordnet ist.

6. Vorrichtung nach Anspruch 4 oder 5, **dadurch gekennzeichnet, dass** das Anschlussmaterial (13) ein Schweiß- oder Lötmaterial ist.

7. Vorrichtung nach einem der Ansprüche 1 bis 6, **dadurch gekennzeichnet, dass** für das supraleitende Hauptkabel (1) und für jedes supraleitende sekundäre Kabel (1 A) die Zonen, die sich längs zwischen den benachbarten Anschlusselementen befinden, mit einem Glättungselement des elektrischen Felds (15) bedeckt sind.

8. Vorrichtung nach einem der Ansprüche 1 bis 7, **dadurch gekennzeichnet, dass** das supraleitende Hauptkabel (1) und die supraleitenden sekundären Kabel (1 A) parallel in der Vorrichtung angeordnet sind.

9. Vorrichtung nach einem der Ansprüche 1 bis 8, **dadurch gekennzeichnet, dass** die Vorrichtung ein dreiphasiges supraleitendes Hauptkabel (1) und dreiphasige supraleitende sekundäre Kabel (1A) umfasst.

## Claims

1. A device for connecting a primary superconducting cable (1) to a plurality of secondary superconducting cables (1 A), said device comprising:
a primary superconducting cable (1) provided with a screen (9) and several concentric phase conductors (3, 5, 7),
several secondary superconducting cables (1A) each provided with a screen (9A) and several concentric phase conductors (3A, 5A, 7A), the screen (9) of the primary superconducting cable (1) being connected to the screen (9A) of each secondary superconducting cable (1 A) using a screen connecting element (12),
each phase conductor (3, 5, 7) of the primary superconducting cable (1) being connected to the corresponding phase conductor (3A, 5A, 7A) of each secondary superconducting cable (1 A) using a phase connecting element (14).

2. The device according to claim 1, **characterized in that** the screen connecting element (12) and the phase connecting element(s) (14) are arranged inside a cryostat (17).

3. The device according to claim 2, **characterized in** a cryogenic fluid (16) is contained inside the cryostat (17).

4. The device according to one of claims 1 to 3, **characterized in that** a connecting material (13) is arranged between the screen connecting element (12) and the screen (9) of the primary superconducting cable (1), as well as between the screen connecting element (12) and each screen (9A) of the secondary superconducting cables (1A).

5. The device according to one of claims 1 to 4, **characterized in that** a connecting material (13) is arranged between each phase connecting element (14) and the corresponding phase conductor (3, 5, 7) of the primary superconducting cable (1), as well as between each phase connecting element (14) and each corresponding phase conductor (3A, 5A, 7A) of the secondary superconducting cables (1 A).

6. The device according to claim 4 or 5, **characterized in that** the connecting material (13) is a welding or brazing material.

7. The device according to one of claims 1 to 6, **characterized in that** for the primary superconducting cable (1) for each secondary superconducting cable (1 A), the zones situated longitudinally between the adjacent connecting elements are covered by a smoothing element of the electric field (15).

8. The device according to one of claims 1 to 7, **characterized in that** the primary superconducting cable (1) and the secondary superconducting cables (1A) are arranged parallel in the device.

9. The device according to one of claims 1 to 8, **characterized in that** the device comprises a three-phase primary superconducting cable (1) and three-phase secondary superconducting cables (1 A).
